# EUROPEAN PATENT SPECIFICATION

(11) **EP 1 632 343 B1**
(45) Date of publication and mention of the grant of the patent: **07.08.2013**
(21) Application number: 04745728.8
(22) Date of filing: 10.06.2004
(51) Int. Cl.: B32B 27/00, G09F 3/04

(54) **MULTILAYER HEAT-SHRINKABLE FILM AND CONTAINERS FITTED WITH LABELS MADE FROM THE FILM THROUGH HEAT SHRINKAGE**
MEHRSCHICHTIGE SCHRUMPFFOLIE UND BEHÄLTER MIT AUS DER FOLIE DURCH SCHRUMPFUNG HERGESTELLTEN ETIKETTEN
FILM THERMORETRACTABLE MULTICOUCHE ET CONTENANTS DOTES D'ETIQUETTES CONSTITUEES DE CE FILM, PAR THERMORETRECISSEMENT

(30) Priority: 11.06.2003 JP 2003166133; 31.07.2003 JP 2003283297
(43) Date of publication of application: 08.03.2006
(73) Proprietor: GUNZE LIMITED, Ayabe-shi, Kyoto 6238511 (JP); Mitsui Chemicals, Inc., Tokyo 105-7117 (JP)
(72) Inventor: WAKAI, Mutsumi, ManufacturingIII Moriyama Factory, Moriyama-shi, Shiga 5248501 (JP); OKUDA, Tomohisa, ManufacturingIII Moriyama Factory, Moriyama-shi, Shiga 5248501 (JP); MORIKAWA, Akira, ManufacturingIII Moriyama Factory, Moriyama-shi, Shiga 5248501 (JP); MARUO, Masaharu, Research & Development Center, Moriyama-shi, Shiga 5248501 (JP); MARUICHI, Naoyuki, Research & Development Center, Moriyama-shi, Shiga 5248501 (JP)
(74) Representative: Gille Hrabal
(86) International application number: PCT/JP2004/008098
(87) International publication number: WO 2004/110750

(56) References cited:
- WO-A-98/44043
- JP-A- 10 237 234
- JP-A- 2001 162 725
- JP-A- 2002 234 115
- JP-A- 2004 170 468

## Description

### TECHNICAL FIELD

The present invention relates to shrink films containing cyclic olefin-based resin. More specifically, the invention relates to such a multi-layered heat-shrinkable film containing cyclic olefin-based resin that is most suitable for labels in that the specific gravity is low, there is no whitening caused by fingerprints at the time of heat shrinkage, and while required levels of haziness (transparency), glossiness, impact resistance, shrink stress, resilience (stiffness), and the like are maintained, heat-shrink properties and perforation properties are excellent.

### Background Art

It is often the case that green tea, sports drinks, juice, drinking water, and the like are filled in containers such as glass bottles and PET bottles when sold. On this occasion, for a container to be distinguished from other products of the same kind and for its improved identification, printed heat-shrinkable label 14 is mounted on the outer surface of container 15. The material for the label includes polystyrene, polyester, polyolefin, and the like.

When containers are made of PET bottles, more and more used PET bottles are being collected for recycling purposes and reclaimed in the form of flakes and pellets. Heat-shrinkable labels are subjected to perforating processing in advance to enable consumers to dispose of the PET bottles and heat-shrinkable labels separately, that is, to facilitate manual removal of the heat-shrinkable labels off the PET bottles. However, in many cases PET bottles are disposed of with the heat-shrinkable labels on.

An outline of the separation process will be described below. Collected PET bottles are separated from other containers such as glass bottles, cans, vinyl chloride bottles, manually or with a mass separator, or through X-ray examinations. Next, the PET bottles are ground into pieces of from a few to ten millimeters square, and then the ground pieces of the heat-shrinkable labels and caps having a specific gravity of lower than 1 are removed with a gravity separator. Further, the ground pieces of the heat-shrinkable labels having a specific gravity of 1 or higher are removed with an air separator. From these ground pieces of the PET bottles thus obtained, recycled PET flakes or recycled PET pellets in the original state are obtained.

The above-described gravity separator is a device such that the ground pieces are placed in water, and those floating on water (the heat shrinkable label and cap having a specific gravity of lower than 1) and those sinking in water (the heat shrinkable label and PET bottle pieces having a specific gravity of 1 or higher) are separated. The air separator is a device such that the ground pieces are spread, and the heat shrinkable label pieces are blown away by air applied from below. Because of respective principles, the processability per unit time of the gravity separator is high, while that of the air separator is low. In view of this, a heat-shrinkable label having a specific gravity of lower than 1 which is removable with the gravity separator is in demand.

However, because the specific gravity of polystyrene labels and polyester labels is higher than 1, there is a problem that these labels cannot be separated with the gravity separator in the recycling process.

On the other hand, polyolefin labels, while having a specific gravity of lower than 1, are not sufficient in resilience and glossiness. Thus, there is problem that these labels cannot be produced by center sealing processing with the use of an organic solvent. Further, polyolefin labels are not shrunk unless at high temperature of heat shrinkage. Thus, there is a problem that the labels cannot be used for bottles that are not heat resistant such as non-heat-resistant PET bottles.

To overcome these drawbacks, multi-layered heat-shrinkable films containing cyclic olefin-based resin have been disclosed. (See, for example, Japanese Patent Application Publication No. 2002-234115, the claims or paragraphs [0012] to [0040], Japanese Patent Application Publication No. 2001-162725, the claims or paragraphs [0017] to [0031], and Japanese Patent Application Publication No.2002-234115.)

### DISCLOSURE OF THE INVENTION

However, the above-described multi-layered heat-shrinkable films of the art are not satisfactory in properties required of heat-shrinkable films for labels, particularly valued properties including heat shrinkage, perforability (tear propagation strength in the longitudinal direction), prevention of whitening of a fingerprint-attached portion, haziness, glossiness, resilience, impact resistance, shrink stress, and so forth.

The use of heat-shrinkable films is rapidly spreading in bottle warmers in supermarkets and convenience stores and in hot-drink vending machines. The multi-layered heat-shrinkable films disclosed in the above-described patent documents 1 and 2 are poor in heat resistance, blocking resistance, and lubricity at the outer surfaces, presenting the inconvenience of blocking between films (containers). Likewise, the inner surfaces of these films are poor in heat resistance, blocking resistance, and lubricity, presenting the inconvenience of blocking between the film and container. The multi-layered heat-shrinkable films described in above-mentioned patent document 3 exhibits high tear propagation strength. Thus, there is a problem that these films are not suitable for the above applications.

It is an object of the present invention to provide a heat-shrinkable film that meets all the above properties and thus is most suitable for labels.

To solve the above and other problems, a first aspect of the present invention provides a multi-layered heat-shrinkable film composed of at least three layers comprising: front and back film layers each composed of a resin composition comprising cyclic olefin-based resin of from 55 to 95 mass % and linear low-density polyethylene of from 45 to 5 mass %; and an intermediate film layer composed of a resin composition comprising: a resin composition of from 95 to 55 mass % mainly composed of propylene-α-olefin random copolymer; and cyclic olefin-based resin of from 5 to 45 mass %, wherein when immersed in hot water of 90°C for 10 seconds, the multi-layered heat-shrinkable film has a heat shrinkage in a lateral direction of 50 % or higher, and has a tear propagation strength in a longitudinal direction of from 800 to 350mN.

The resin composition mainly composed of the propylene-α-olefin random copolymer comprises the propylene-α-olefin random copolymer and petroleum resin.
The resin composition mainly composed of the propylene-α-olefin random copolymer comprises the propylene-α-olefin random copolymer, the petroleum resin, and low-crystalline ethylene-α-olefin copolymer and/or low-crystalline propylene-α-olefin copolymer.

Wetting tension of at least one surface of the film is in a range of from 38 to 48 mN/m.

In addition, a container comprising a label comprising the multi-layered heat-shrinkable film, the label being heat-shrunk onto a container body, is provided.

A second aspect of the present invention provides a multi-layered heat-shrinkable film composed of at least three layers comprising: front and back film layers each composed of a resin composition (1); and an intermediate film layer composed of a resin composition (2), wherein: an overcoat layer is provided on a principal surface of a front film layer of the multi-layered heat-shrinkable film, the principal surface being opposite a surface facing the intermediate film layer; the resin composition (1) comprises cyclic olefin-based resin of from 55 to 95 mass % and linear low-density polyethylene of from 45 to 5 mass %; and the resin composition (2) comprises: a resin composition of from 95 to 55 mass % mainly composed of the propylene-α-olefin random copolymer; and the cyclic olefin-based resin of from 5 to 45 mass %.

An innercoat layer is provided on a principal surface of a back film layer of the multi-layered heat-shrinkable film, the principal surface being opposite a surface facing the intermediate film layer.

Further, a container comprising a label comprising the multi-layered heat-shrinkable film, the label being heat-shrunk onto a container body, is provided.

This application claims priority from Japanese Patent Application No. 2003-166133, filed June 11, 2003, and Japanese Patent Application No. 2003-283297, filed July 30, 2003.

### BRIEF DESCRIPTION OF THE DRAWINGS

Fig. 1 is a view schematically showing the center sealing processing method.
Fig. 2 is a plan view showing the printing design obtained in example 1.
Fig. 3 is a schematic cross section of a multi-layered heat-shrinkable film according to the first aspect of the present invention.
Fig. 4 is a schematic cross section of a multi-layered heat-shrinkable film according to the second aspect of the present invention.
Fig. 5 is a schematic view of a container having a label that is heat-shrunk onto the container and is composed of a multi-layered heat-shrinkable film.

### BEST MODE FOR CARRYING OUT THE INVENTION

### (An embodiment according to the first aspect of the present invention)

The first aspect of the present invention and a preferred embodiment will be described below.

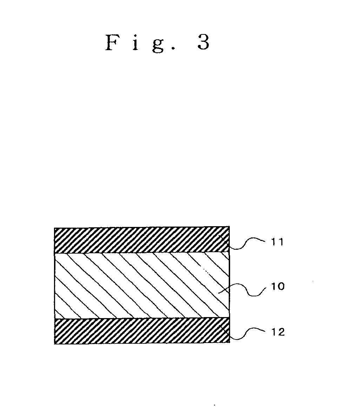

Referring to Fig. 3, the cyclic olefin-based resin that is one of the components of front-back film layers 11 and 12 according to the present invention are, for example, (a) random copolymers of ethylene or propylene and cyclic olefin (e.g., norbornene and its derivatives, and tetracyclododecen and its derivatives), (b) ring-opened polymers of the cyclic olefin or copolymers of the cyclic olefin and α-olefin, (c) hydrogenated copolymers of the copolymers in (b), and (d) graft-modifications of (a) to (c) modified with unsaturated carboxylic acid. The specific gravity of the cyclic olefin-based resin is preferably from 1.00 to 1.06, and the number average molecular weight measured by GPC (Gel Permeation Chromatography) is preferably from 1000 to 1000000.

The glass transition temperature of the cyclic olefin-based resin is preferably from 50 to 130°C, more preferably from 65 to 100°C, and further more preferably from 70 to 80°C. If the glass transition temperature is lower than 50°C, the heat resistance of the surface of the film deteriorates and the surface becomes adhesive upon exposure to heat. If such cyclic olefin-based resin is used for a shrink label, then on the mounting line, the phenomenon of blocking between containers tends to occur, and the cold shrinkage tends to be excessively high.

On the other hand, if the glass transition temperature exceeds 130°C, the heat shrinkage in the lateral direction tends to become excessively low.

It should be noted that the notation of range "from ... to ..." as used in this specification is intended to include the indicated two extreme values. For example, if some value is in the range of from A to B, the value is A or more or B or less.

The density of the linear low-density polyethylene, which is another component of front-back film layers 11 and 12, is preferably from 0.910 to 0.935 g/m³, more preferably from 0.912 to 0.930 g/m³, and further more preferably from 0.915 to 0.925 g/m³.

If the density is lower than 0.910 g/m³, the heat resistance of the surface of the film tends to deteriorate.

On the other hand, if the density exceeds 0.935 g/m³, while heat resistance improves, the film cannot be stretched unless under high temperature, and the entire film tends to become whitish resulting in a film with deteriorated haziness (transparent). In addition, the heat shrinkage in the lateral direction tends to become low.

The melt flow rate (MFR) (190°C, 21.18N) of the linear low-density polyethylene is preferably from 0.2 to 30 g/10min., more preferably from 0.5 to 25 g/10min., and further more preferably from 1.0 to 20 g/10min. If the MFR is lower than 0.2 g/10min., the linear low-density polyethylene has poor kneading and dispersion with respect to the cyclic olefin-based resin, and thus the film tends to have poor surface conditions. On the other hand, if the MFR exceeds 30 g/10min., the melt viscosity decreases and thus the flow casting stability of the melted polymer film that flows out of the T-die tends to be poor.

For the linear low-density polyethylene, the α-olefin that is copolymerized with the ethylene is preferably at least one of the α-olefins having from 4 to 12 carbon atoms. More preferable among the copolymers is bipolymer of ethylene and 1-butene or 1-hexene, or terpolymer of ethylene, 1-butene, and 1-hexene. Further more preferable among these is bipolymer of ethylene and 1-hexene.

The blend ratio of the cyclic olefin-based resin and the linear low-density polyethylene is from 55 to 95 mass % for the cyclic olefin-based resin and from 45 to 5 mass % for the linear low-density polyethylene, preferably from 60 to 90 mass % for the cyclic olefin-based resin and from 40 to 10 mass % for the linear low-density polyethylene, and more preferably from 65 to 90 mass % for the cyclic olefin-based resin and from 35 to 10 mass % for the linear low-density polyethylene.

If the blend ratio of the linear low-density polyethylene exceeds 45 mass %, haziness (transparency) tends to deteriorate.

On the other hand, if the blend ratio of the linear low-density polyethylene is lower than 5 mass %, it tends to be difficult to completely prevent, at the time of heat shrinkage, whitening of a fingerprint-attached portion. Further, it tends to be difficult to maintain the lubricity of the film surface at the time of corona discharge treatment.

The resin configurations of the front film layer and the back film layer, that is, the kinds (including the difference of MFR) of the cyclic olefin-based resin and the linear low-density polyethylene may be the same or different. Also, two or more of these may be included. Further, the resin composition ratios may be the same or different.

More preferably, the front film layer 11 and the back film layer 12 have the same resin configurations and resin composition ratios.

Without departing from the scope of the present invention, in the resin compositions that constitute front and back film layers 11 and 12, known substances may be suitably added such as antistatic agents, anti-blocking agents, lubricants, ultraviolet absorber, stabilizers, coloring agents, low-density polyethylene, and other resins.

Incidentally, when petroleum resin is added as a resin composition of the front and back film layers, the surface glossiness of the film is improved. However, a study carried out by the inventors shows that since petroleum resin enhances its viscosity as it is heated there can be blocking between labels on the mounting line where the films are heat shrunk, and it is preferable to minimize the amount of addition of the petroleum resin. It should be noted that the petroleum resin used in the present invention refers to what is generally called as petroleum resin such as aliphatic hydrocarbon resin, aromatic hydrocarbon resin, alicyclic hydrocarbon resin, and hydrogenated products thereof, and to rosin, rosin ester, and terpene resin.

While Ziegler-Natta catalyst-based LLDPE, which is formed by polymerization using Ziegler-Natta catalyst, may be used as the linear low-density polyethylene (LLDPE), metallocene catalyst-based LLDPE, which is formed by polymerization using metallocene catalyst, is preferably used. This is because of the following reasons. The use of Ziegler-Natta catalyst-based LLDPE requires addition of petroleum resin in order to prevent whitening caused by fingerprints and to improve transparency. On the other hand, the use of metallocene catalyst-based LLDPE sufficiently prevents whitening caused by fingerprints and improves transparency without adding petroleum resin and eliminates the occurrence of blocking caused by addition of petroleum resin. Also, metallocene catalyst-based LLDPE shows a significantly small increase in its viscosity when heated compared with Ziegler-Natta catalyst-based LLDPE. The term Ziegler-Natta catalyst is intended to mean the catalysts described by Komatsu et al. on pages 14 to 22 of "New Polymer Made Using Metallocene Catalyst," Kogyo Chosakai Publishing Inc., 1999. The term metallocene catalyst is intended to mean the catalysts described on pages 22 to 36 of the book. The LLDPE according to the present invention is optimally produced using, among the above metallocene catalysts, a group 4 transition metal compound in the periodic table with ligands of two cyclopentadienyl skeletons.

The low-density polyethylene as used in the present specification has a density of from 0.910 to 0.935 g/m³.

Referring to Fig. 3, the propylene-α-olefin random copolymer used for intermediate film layer 10 of the present invention is random copolymer mainly composed of propylene, and the α-olefin preferably has 2 to 12 carbon atoms (excluding 3), examples including ethylene, 1-butene, 1-hexene, and 1-octene. The copolymer may contain two or more α-olefins. Also, a blend of propylene-α-olefin random copolymers of different kinds (including the difference of MFR) may be used. As the propylene-α-olefin random copolymer, propylene-ethylene random copolymer or propylene-ethylene-α-olefin ternary random copolymer is more preferable. Propylene-ethylene random copolymer with an ethylene content of from 2 to 8 mol% is further more preferable, and propylene-ethylene random copolymer with an ethylene content of from 4 to 7 mol% is most preferable.

It is more desirable to add petroleum resin in the propylene-α-olefin random copolymer that constitutes intermediate film layer 10. By addition of petroleum resin, the effect of increasing the heat shrinkage in the lateral direction is obtained. The amount of addition of the petroleum resin is preferably from 5 to 70 parts by mass per 100 parts by mass of the propylene-α-olefin random copolymer, more preferably from 25 to 55 parts by mass per 100 parts by mass of the propylene-α-olefin random copolymer.

If the amount of addition of the petroleum resin is less than 5 parts by mass, the effect of addition is small, and if the amount of addition of the petroleum resin exceeds 70 parts by mass, the film becomes hard and brittle resulting in a film with smaller strength and inferior physical properties. In addition, the resin coils around the screw of the extruder at the time of film production. This makes what is called bridging easy to occur which causes surging. Thus, it tends to be difficult to carry out stable extrusion.

The petroleum resin used in the present invention refers to what is generally called petroleum resin such as aliphatic-based hydrocarbon resin, aromatic-based hydrocarbon resin, alicyclic-based hydrocarbon resin, and hydrogenated products thereof, and to rosin, rosin ester, and terpene resin, and hydrogenated products the foregoing are particularly preferable.

Referring to Fig. 3, it is preferable to add, in the propylene-α-olefin random copolymer in intermediate film layer 10, low-crystalline ethylene-α-olefin copolymer and/or low-crystalline propylene-α-olefin copolymer. By addition of low-crystalline ethylene-α-olefin copolymer and/or low-crystalline propylene-α-olefin copolymer, the effect of improving the impact resistance of the film is obtained.

The resin for low-crystalline ethylene-α-olefin copolymer and low-crystalline propylene-α-olefin copolymer is not particularly limited insofar as the resin is low-crystalline resin mainly composed of ethylene or propylene. Preferable resin is, for example, low-crystalline ethylene-1-butene copolymer. The low-crystalline resin described in the present specification refers to such resin that while no clear melting-point peak is confirmed with a differential scanning calorimeter (DSC), a characteristic peak is confirmed slightly with X-ray diffraction.

The amount of addition of the low-crystalline ethylene-α-olefin copolymer and/or low-crystalline propylene-α-olefin copolymer is preferably from 3 to 30 parts by mass, and more preferably from 5 to 20 parts by mass, per 100 parts by mass of the propylene-α-olefin random copolymer, or per 100 parts by mass of a resin composition having the propylene-α-olefin random copolymer and petroleum resin. If the amount of addition is less than 3 parts by mass, the effect of addition is small, and if the amount of addition exceeds 30 parts by mass, the resilience (stiffness) of the film tends to decrease.

Intermediate film layer 10 of the present invention is composed of a resin composition having: a resin composition mainly composed of the propylene-α-olefin random copolymer; and the cyclic olefin-based resin. The cyclic olefin-based resin is as described above, and may be the same as or different from the cyclic olefin-based resin that constitutes the front and back layers, but it is more preferable to use the same cyclic olefin-based resin.

The amount of blend is such that the resin composition mainly composed of the copolymer is from 95 to 55 mass %, and the cyclic olefin-based resin is from 5 to 45 mass %, preferably such that the resin composition mainly composed of the copolymer is from 94 to 65 mass %, and the cyclic olefin-based resin is from 6 to 35 mass %, and more preferably such that the resin composition mainly composed of the copolymer is from 93 to 70 mass %, and the cyclic olefin-based resin is from 7 to 30 mass %.

If the resin composition mainly composed of the copolymer exceeds 95 mass % and the cyclic olefin-based resin is less than 5 mass %, the tear propagation strength in the longitudinal direction tends to increase and resilience (stiffness) tends to decrease.

On the other hand, if the resin composition mainly composed of the copolymer is less than 55 mass % and the cyclic olefin-based resin exceeds 45 mass %, the tear propagation strength in the longitudinal direction tends to become significantly small and haziness (transparency) and glossiness tend to deteriorate.

Without departing from the scope of the present invention, in intermediate film layer 10, known substances may suitably be added such as antistatic agents, lubricants, ultraviolet absorber, stabilizers, coloring agents, linear low-density polyethylene, and other resins.

The thickness ratio of front and back film layers 11, 12 and intermediate film layer 10 is preferably such that front film layer/intermediate film layer/back film layer is from 1/2 to 10/1, more preferably such that front film layer/intermediate film layer/back film layer is from 1/3 to 7/1, and further more preferably such that front film layer/intermediate film layer/back film layer is from 1/3 to 5/1. The total film thickness is preferably generally from 30 to 70 µm.

To improve the adhesivity with respect to the printing ink, it is desirable to carry out corona discharge treatment on one surface of the film. When the surface opposite the printed surface is subjected to overcoating, it is desirable to carry out corona discharge treatment on both surfaces of the film.

The intensity of corona discharge treatment is preferably such that a wetting tension of from 38 to 48 mN/m is maintained.

If the wetting tension is less than 38 mN/m, the adhesivity with respect to the printing ink and overcoat agent tends to deteriorate. On the other hand, if the wet tension exceeds 48 mN/m, the lubricity of the film tends to deteriorate.

The film of the present invention can be produced by a known method. As for the form of the film, the film may be planar or tubular, but preferably planar in terms of productivity (several films, as products, can be cut in the lateral direction of a raw film) and printability on the inner surface. As a production method in the case of the planar form, the following method can be exemplified. Using a plurality of extruders, resin is melted, coextruded from the T-die, solidified by cooling with a chilled roll, roll-stretched in the longitudinal direction, tenter-stretched in the lateral direction, heat set, cooled, subjected to corona discharge treatment at least on one surface, and wound up with a winder, thus obtaining a film. Also, such a method is applicable that a film produced by the tubular method is cut open into the planar form.

While stretching in the longitudinal direction is not necessarily essential, some stretching in the longitudinal direction is desirable to improve the easiness of splitting of the film in the lateral direction.

As the conditions for roll-stretching in the longitudinal direction, the following ranges are preferable. The temperature of the pre-heating roll is from 70 to 90°C, the temperature of a first nip roll and a second nip roll, both for stretching, is from 80 to 95°C, the stretching ratio is from 1.05 to 1.30 times, and the stretching time is preferably as short as possible; specifically, 0.1 to 0.3 second is preferable.

As the conditions for tenter-stretching in the lateral direction, the following ranges are preferable. After preheating the film sufficiently at a temperature of from 110 to 120°C, the stretching zone is divided into at least two zones, and it is preferable to set the temperature of the stretching zone at the entrance side at 95°C or lower and the temperature of the stretching zone at the exit side at 85°C or lower.

The stretching ratio is preferably from 4.5 to 5.5 times. The stretching time is preferably from 5 to 12 seconds.

As the conditions for heat setting, the following ranges are preferable. Heat setting is preferably carried out at a temperature of from 70°C to 80°C for 4 to 7 seconds while carrying out 3 to 8 % of relaxation.

A method for preparing a shrink label from the film thus obtained will be exemplified below. The above film, which is produced with the ratio of the stretching ratios substantially in the category of uniaxial stretching, is subjected to printing by a suitable method such as gravure printing on the surface subjected to corona discharge treatment.

As for the printing method, generally, gravure printing is preferable, and the printing ink is not particularly limited insofar as the printing ink has good adhesivity with respect to the film. For example, a mixture of urethane-based resin and nitrocellulose, and an ink with, as the resin content, acrylic resin can be exemplified.

The surface to be printed may be on the front film layer side or on the back film layer side. Generally, though, to improve glossiness, printing is carried out on the back film layer of the film, that is, on the layer to be the inner surface of the resulting label.

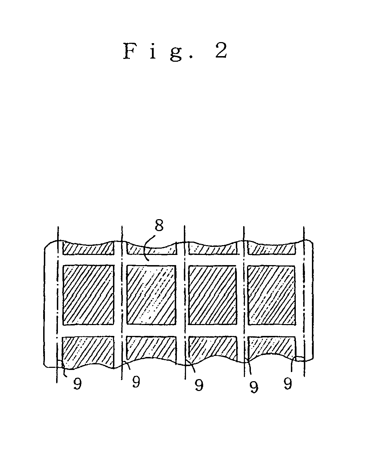

The printing design is, as shown in Fig. 2, a discontinuous design so that the upper end portion and lower end portion of the resulting label correspond to non-printed portions 8, and the gap (non-printed portion 8) is 80 mm or smaller, and generally from 3 to 40 mm. Also as shown in Fig. 2, a general design is such that by providing positions 9 at which the film is slit in non-printed portions 8, the portions corresponding to the both end portions of the seal margin (generally from 3 to 20 mm wide) of a center seal, described later, are also non-printed portions.

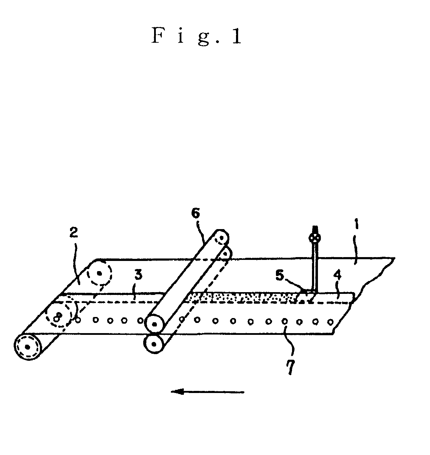

To obtain a tubular label from the printed planar heat-shrinkable film thus prepared, center sealing is carried out with the use of an organic solvent. This center sealing processing will be described based on Fig. 1. Fig. 1 is a view schematically showing a representative center sealing processing method, in which reference numeral 1 refers to a flat film the both ends of which are folded as forming an envelope, 2 refers to a tubular film formed by center sealing, 3 refers to a center seal portion, 4 refers to a seal margin, 5 refers to a nozzle for applying an organic solvent, and 6 refers to a nip roll. The film proceeds in the arrow direction shown in Fig. 1, and by applying an organic solvent onto seal margin 4 with nozzle 5 and by carrying out press bonding with nip roll 6, a tubular film is prepared. Subsequently, the film is cut into appropriate lengths thereby obtaining shrink labels. The rate of the center sealing is generally from 100 to 250 m/min, and preferably from 130 to 200 m/min.

The organic solvent used here is not particularly limited insofar as it dissolves or swells the front and back film layers of the film. In terms of stable productivity, as the organic solvent, cyclohexane or one that has, as a main component, cyclohexane and, as a subcomponent, methyl ethyl ketone is more preferable.

It is preferable to carry out perforation processing immediately before the center sealing.

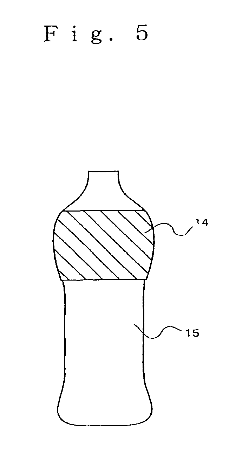

The multi-layered heat-shrinkable film of the present invention has, when immersed in hot water of 90°C for 10 seconds, a heat shrinkage in the lateral direction of 50 % or higher, and a tear propagation strength in the longitudinal direction of from 800mN to 350mN, preferably from 750mN to 350mN. Since the heat shrinkage is this high, the film has sufficient shrinkability and residual shrinkage stress even when, for example, label 14 is placed over the shoulder portion of container body 15, as shown in Fig. 5. In addition, since the tear propagation strength in the longitudinal direction is this low, shrink label 14 that is subjected to perforation processing can be easily removed manually off container body 15.

Films with such physical properties can be easily obtained by the combination of the resin configuration and resin composition ratio of each layer, the thickness ratio of the layers, the stretching conditions in the longitudinal direction and in the lateral direction (the pre-heating temperature, stretching ratio, stretching temperature, and stretching rate), heat-setting conditions, and the like while keeping these conditions within the above-described respective ranges.

The upper limit of the heat shrinkage in the lateral direction when the film is immersed in hot water of 90°C for 10 seconds is desirably restricted to 70 % in terms of the balance between the heat shrinkage and various physical properties required of a label-purpose film. The heat shrinkage in the lateral direction when the film is immersed in boiling water for 10 seconds is from 60 to 80 %.

If the specific gravity of the shrink label of the present invention is made 1 or lower (the specific gravity including that of the printing ink and the overcoat agent), the shrink label becomes more preferable one for PET bottles in terms of recycling.

As container body 15 on which shrink label 14 prepared from the heat-shrinkable film of the present invention is mounted, PET bottles are preferable, as described above, but they are not to be restrictive; other plastic containers and glass containers can also be used.

Next, representative examples will be described along with comparative examples. The measurement and evaluation of the physical property values were carried out as follows in the present invention.

The measurement of the heat shrinkage in the lateral direction when the film was immersed in hot water of 90°C (or in boiling water) was carried out by the following method. Ten samples each such that longitude × latitude = 100 mm × 100 mm are cut out of the heat-shrinkable film. Then, one of these samples is immersed in hot water of 90°C (or in boiling water) for 10 seconds, taken out immediately thereafter and cooled in cold water (approximately 25°C). Then, length L (mm) in the lateral direction is measured. Then, 100 — L is carried out. The same is repeated to the remaining nine samples, and the average value (ten-point average value) of the 10 samples was assumed the 90°C (or boiling water) heat shrinkage in the lateral direction.

The measurement of the tear propagation strength in the longitudinal direction was carried out by the following method. With the use of Light-load Tearing Tester produced by Toyo Seiki Seisaku-Sho, Ltd., the measurement was carried out in accordance with JIS P 8116 (ten-point average value).

The measurement of the haze value was carried out by the following method. With the use of NHD 2000 produced by Nippon Denshoku Industries Co., Ltd., the measurement was carried out in accordance with JIS K 7105 (ten-point average value).

The measurement of the degree of glossiness was carried out by the following method. With the use of Gloss Meter VG 2000 produced by Nippon Denshoku Industries Co., Ltd., the measurement was carried out in accordance with JIS K 7105 (ten-point average value).

The measurement of the shrink stress in the lateral direction was carried out by the following method. A sample such that the lateral direction of the film × the longitudinal direction of the film = 150 mm length × 10 mm wide was cut out of the film, and a marked line was drawn in the lateral direction of the film such that a gap of 100 mm was secured. After setting the sample in HEIDON 17 Peeling Tester produced by Shinto Scientific Co., Ltd. with a chuck distance of 100 mm, the sample was immersed in hot water of 90°C for 30 seconds, and the maximum stress is measured during the immersion. The same measurement of the maximum stress was carried on 10 samples in total, and the average value thereof was assumed the shrink stress (ten-point average value).

The measurement of resilience (stiffness) was carried out with the use of Loop Stiffness Tester produced by Toyo Seiki Seisaku-Sho, Ltd. (ten-point average value).

The evaluation of whitening of a fingerprint-attached portion was carried out such that after the surface of the front film layer of the shrink label was touched by hand, the shrink film was heat-shrunk onto a PET bottle, and visual inspection for whitening of the touched portion was carried out, with the case of whitening recognized being evaluated × and the case of whitening not recognized being evaluated o.

### (Example 1)

A resin compound to be the front and back film layers had 68 mass % of random copolymer (APEL 8009T, available from Mitsui Chemicals, Inc.) of ethylene and cyclic olefin, 31 mass % of metallocene-catalyst-based linear low-density polyethylene (Evolue SP 2320, available from Mitsui Chemicals, Inc.) that was formed by polymerization with metallocene catalyst and had 1-hexene as a copolymerization component, and 1 mass % of master batch having Evolue SP 2320 as base resin and containing 10 mass % of synthetic silica. A resin compound to be the intermediate layer had 72 mass % of propylene-ethylene random copolymer (F239V, available from Mitsui Chemicals, Inc.) containing petroleum resin, 8 mass % of low-crystalline ethylene-1-butene copolymer (Tafmer A4085, available from Mitsui Chemicals, Inc.), and 20 mass % of random copolymer (APEL 8009T, available from Mitsui Chemicals, Inc.) of ethylene and cyclic olefin. These resin compounds were put into separate extruders, coextruded from a T-die for coextrusion at 185°C, and moved onto a chilled roll of 25°C and solidified by cooling. Then, with the pre-heating roll temperature set at 80°C, the first nip roll temperature at 85°C, the second nip roll temperature at 90°C, and the stretching time at 0.25 second, the film was subjected to roll-stretching of 1.2 times in the longitudinal direction. Subsequently, after preheated at 118°C for 9 seconds, the film was subjected to tenter-stretching of 5.0 times in the lateral direction with a first stretching zone (the entrance side of the stretching zone) set at 90°C, a second stretching zone (the exit side of the stretching zone) at 77°C, and the retention time of the film at 5 seconds in each zone (which means the stretching time was 10 seconds). In the same tenter, the film was heat set while subjected to 7% of relaxation in the width direction at a temperature of 75°C for 6 seconds, and cooled by cold air of approximately 25°C. Then, one surface of the film was subjected to corona discharge treatment at an intensity of 3.5 w-min/m², and the film was wound up. (The wet tension of the surface subjected to corona discharge treatment was measured, which was 46 mN/m.)

The thickness of the film was 50 µm in total including 8 µm for each of the front-back film layers and 34 µm for the intermediate film layer. Table 1 shows this film's heat shrinkages in the lateral direction (each for the case of immersion in hot water of 90°C for 10 seconds and for the case of immersion in boiling water for 10 seconds), tear propagation strength in the longitudinal direction, haziness, degree of glossiness, shrink stress in the lateral direction in the case of immersion in hot water of 90°C, and resilience (stiffness).

### (Example 2)

A multi-layered heat-shrinkable film was obtained in the same manner as in example 1 except that the resin composition ratio of the intermediate film layer was such that F239V was 65 mass %, Tafmer A4085 was 7 mass %, and APEL 8009T was 28 mass %. Table 1 shows this film's heat shrinkages in the lateral direction (each for the case of immersion in hot water of 90°C for 10 seconds and for the case of immersion in boiling water for 10 seconds), tear propagation strength in the longitudinal direction, haziness, degree of glossiness, shrink stress in the lateral direction in the case of immersion in hot water of 90°C, and resilience (stiffness).

### (Comparative Example 1)

A multi-layered heat-shrinkable film was obtained in the same manner as in example 1 except that the resin composition ratio of the intermediate film layer was such that F239V was 45 mass %, Tafmer A4085 was 5 mass %, and APEL 8009T was 50 mass %. Table 1 shows this film's heat shrinkages in the lateral direction (each for the case of immersion in hot water of 90°C for 10 seconds and for the case of immersion in boiling water for 10 seconds), tear propagation strength in the longitudinal direction, haziness, degree of glossiness, shrink stress in the lateral direction in the case of immersion in hot water of 90°C, and resilience (stiffness).

### (Comparative Example 2)

A multi-layered heat-shrinkable film was obtained in the same manner as in example 1 except that the resin composition ratio of the intermediate film layer was such that F239V was 90 mass % and Tafmer A4085 was 10 mass %. Table 1 shows this film's heat shrinkages in the lateral direction (each for the case of immersion in hot water of 90°C for 10 seconds and for the case of immersion in boiling water for 10 seconds), tear propagation strength in the longitudinal direction, haziness, degree of glossiness, shrink stress in the lateral direction in the case of immersion in hot water of 90°C, and resilience (stiffness).

### (Example 3)

A multi-layered heat-shrinkable film was obtained in the same manner as in example 1 except that the resin composition ratio of the intermediate film layer was a mixture of 45 mass % of F239V, 5 mass % of Tafmer A4085, and 50 mass % of a comminuted product of the film obtained in comparative example 2. (The mass percentage of APEL 8009T in the intermediate film layer was approximately 12 mass %.) Table 1 shows this film's heat shrinkages in the lateral direction (each for the case of immersion in hot water of 90°C for 10 seconds and for the case of immersion in boiling water for 10 seconds), tear propagation strength in the longitudinal direction, haziness, degree of glossiness, shrink stress in the lateral direction in the case of immersion in hot water of 90°C, and resilience (stiffness)

**<Table 1>**

| | Ex. 1 | Ex. 2 | Ex. 3 | Com. Ex. 1 | Com. Ex. 2 |
|---|---|---|---|---|---|
| Heat shrinkage (%): | | | | | |
| 90°C water × 10 sec. | 58 | 58 | 58 | 59 | 56 |
| Boiling water × 10 sec. | 66 | 66 | 66 | 67 | 66 |
| Tear propagation strength (mN) | 642 | 558 | 696 | 323 | 834 |
| Haziness (%) | 2.72 | 2.859 | 2.56 | 3.30 | 2.24 |

| Glossiness (%) | | | | | |
|---|---|---|---|---|---|
| Longitudinal direction | 129 | 127 | 130 | 121 | 131 |
| Lateral direction | 143 | 140 | 144 | 136 | 145 |
| Shrink stress (Mpa) | 6.7 | 6.7 | 6.6 | 6.9 | 6.2 |

| Resilience (stiffness) (mN): | | | | | |
|---|---|---|---|---|---|
| Longitudinal direction | 22.2 | 23.0 | 21.7 | 25.5 | 19.1 |
| Lateral direction | 24.3 | 25.1 | 23.8 | 29.3 | 23.0 |

### (Example 4)

The film obtained in Example 1 had its corona-discharge-treated surface subjected to five-color printing of a predetermined design with a gravure printer. Here such a printing design was used that provided four-piece cutting (enabled slitting in four) in the width direction of the film, with the edge portions of each of the pieces being non-printed portions. Next, slitting into four pieces (quartering) was carried out with a slitter.

Next, while perforation processing of one straight line of dots was carried out (not shown), center sealing was carried out at a processing rate of 150 m/min with the printed surface facing inward. In the center sealing, center sealing equipment with a mechanism as shown in Fig. 1 was used, and as an organic solvent, a mixture solvent of 100 parts by mass of cyclohexane and 5 parts by mass of methyl ethyl ketone was used. Thus, a tubular heat-shrinkable label (original film) was prepared. The folding diameter was 108.5 mm and the seal margin was 4 mm wide. Next, this tube was cut to a length of 80 mm to have a cylindrical heat-shrinkable label. After a PET bottle was inserted in the label and the surface of the front film layer was touched by hand, by carrying out humidity-heat treatment at 90°C for 7 seconds with the use of a shrink tunnel of a humidity-heat system (length: 5 m, vapor pressure: from 0.03 to 0.07 MPa), the label was heat-shrunk onto the PET bottle. The label was in tight contact with the bottle, and no whitening was observed in the hand-touched portion (fingerprint-attached portion) (evaluated o). In addition, the label was pleasant-looking having no wrinkles, spots, or the like. Further, the label was easily removed manually along the perforation.

### (Comparative Example 3)

A multi-layered heat-shrinkable film was obtained in the same manner as in example 1 except that the resin composition ratio of the front-back film layers was 99 mass % of APEL 8009T and 1 mass % of master batch in which 10 mass % of synthetic silica was contained in Evolue SP 2320, which was base resin.

Next, similarly to example 4, a cylindrical heat-shrinkable label was obtained from the film and heat shrunk onto a PET bottle. The hand-touched portion was whitened (evaluated ×), which means a label of no commercial value.

As described hereinbefore, the film according to the first aspect of the present invention is light-weight, and if the film has a specific gravity of lower than 1, separation with a specific gravity separator is possible in the PET bottle recycling process. In addition, the fingerprint-attached portion is not whitened at the time of heat shrinkage. Further, while maintaining required levels of haziness (transparency), glossiness, impact resistance, shrink stress, resilience (stiffness), and the like, the film excels in heat-shrink properties (high heat shrinkage) and perforation properties (low tear propagation strength in the longitudinal direction).

In addition, by making the linear low-density polyethylene of the front-back film layers based on metallocene catalyst so that the amount of addition of petroleum resin is significantly reduced or that petroleum resin is not added at all, it is possible to, while sufficiently preventing whitening caused by fingerprints and improving transparency, prevent blocking between labels on the mounting line where films are heat shrunk.

### (An embodiment according to the second aspect of the present invention)

The second aspect of the present invention and a preferred embodiment will be described below.

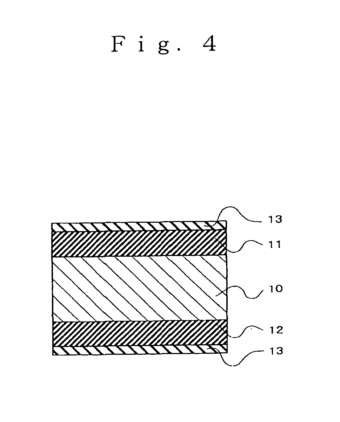

Referring to Fig. 4, the multi-layered heat-shrinkable film according to the second aspect of the present invention is similar to the multi-layered heat-shrinkable film according to the first aspect except that the glass transition temperature of the cyclic olefin-based resin is preferably from 60 to 90°C, more preferably from 70 to 80°C, and that a surface of front and back film layers 11 and 12 is covered with coating layer 13. Accordingly, duplicate descriptions on physical properties and the production method will not be provided below. It should be noted that the above range of the glass transition temperature is because if it is lower than 60°C, the natural shrinkage of the multi-layered heat-shrinkable film tends to become high, and if the glass transition temperature exceeds 90°C, the heat shrinkage in the lateral direction tends to become low.

The multi-layered heat-shrinkable film according to the second aspect of the present invention is such that in order to impart heat resistance, blocking resistance, and smoothness, which are required when the film is intended in bottle warmers and in hot-drink vending machines, to the multi-layered heat-shrinkable film of the first aspect, an overcoat layer is provided on the front film layer side of the film.

It is necessary to provide overcoat layer 13 on the front film layer except for the portion corresponding to a center seal portion, described later. This is because if the overcoat layer is provided on the entire surface of the front film layer, it is not possible to maintain required center sealing strength. It is therefore preferable to provide the overcoat layer on the entire surface of the front-film layer except for the portion corresponding to the center seal portion.

An overcoat agent for forming overcoat layer 13 is such that resin is dissolved in a suitable solvent such as toluene, ethyl acetate, methyl ethyl ketone, isopropyl alcohol, or the like. This resin is not particularly limited insofar as the resin has good adhesivity with respect to the front-film layer of the film and required heat resistance. For example, acrylic resin, urethane resin, and polyamide resin can be exemplified. Acrylic resin is preferable among the foregoing in that with acrylic resin heat resistance can be easily controlled.

To further improve blocking resistance and smoothness, it is more preferable to add silicon oil, polyethylene wax, fluorine-based wax, and the like in the overcoat agent.

A preferable standard for heat resistance and blocking resistance is such that after the overcoat layers of films are overlapped to face each other and left for 14 days with a load of 17 g/cm² and at a temperature of 70°C, there is no blocking between the films.

A preferable standard for smoothness is such that µs (static friction coefficient) and µd (dynamic friction coefficient) measured in accordance with ASTM D 1894 are from 0.13 to 0.35, more preferably from 0.15 to 0.25.

The thickness of overcoat layer 13 (after being dried) is preferably from 0.2 to 2.0 µm, and more preferably from 0.5 to 1.5 µm.

It is possible to add, in the overcoat agent, fine particles such as crosslinked acrylic resin and silica in order to have a mat surface for the overcoat layer.

The method for providing overcoat layer 13 over the front-film layer 11 side of the film can be one of the various methods for coating, but it is preferable to use gravure printing. This is because with gravure printing it is possible to provide the overcoat layer continuously after the above-described printing with the use of the same printer. In this case, it is necessary to, after the printing, reverse the film before providing the overcoat layer.

In the case of providing the overcoat layer by gravure printing, the overcoat agent preferably has a viscosity measured by Zahn cup #3 of from 13 to 20 seconds.
When the film is intended in bottle warmers and in hot-drink vending machines, it is desirable to provide innercoat layer 13 on the back-film layer side of the film in order to prevent blocking between the non-printed portions of the back-film layer of the film and the container such as a PET bottle. Innercoat layer 13 can be provided on the entire surface of the back-film layer except for the portion corresponding to a center seal portion, described later, but in terms of cost, innercoat layer 13 is more preferably provided to cover the non-printed portions except for the portion corresponding to the center seal portion. (If the innercoat layer is provided to cover the center seal portion, required center seal strength cannot be maintained.)

As an innercoat agent for forming innercoat layer 13, the same agent as the overcoat agent can be used. The thickness of the innercoat layer (after being dried) is preferably from 0.2 to 2.0 µm, preferably from 0.5 to 1.5 µm.

The method for providing innercoat layer 13 over the back-film layer 12 side of the film can be one of the various methods for coating, but it is preferable to use gravure printing. If the overcoating is likewise carried out by gravure printing, the above-described printing, innercoating, and overcoating are carried out continuously on a single printer, which results in excellent productivity. In this case, it is necessary to provide the innercoat layer after the printing and subsequently to reverse the film before providing the overcoat layer.

In the case of providing the innercoat layer by gravure printing, the innercoat agent preferably has a viscosity measured by Zahn cup #3 of from 13 to 20 seconds.

Next, representative examples will be described along with comparative examples. The measurement and evaluation of the physical property values were carried out as follows in the present invention.

The measurement of the heat shrinkage in the lateral direction when the film was immersed in hot water of 90°C (or in boiling water), the tear propagation strength in the longitudinal direction, the shrink stress in the lateral direction, and the resilience (stiffness) of the film was carried out in the same manner as in the first aspect.

The measurement of the µs (static friction coefficient) and µd (dynamic friction coefficient) of the film was carried out by the following method. With the use of HEIDON Surface Property Tester 14 DR produced by Shinto Scientific Co., Ltd., the measurement was carried out in accordance with ASTM D 1894 (ten-point average value).

The evaluation of the blocking resistance of the overcoat layer was carried out by the following method. (For the film (comparative example 1) without an overcoat layer, this evaluation was carried out on the front-film layer.) Samples each such that the lateral direction of the film × the longitudinal direction of the film = 50 mm wide × 50 mm wide were cut out of the film, and overlapped so that the overcoat layers faced each other. (For the film (comparative example 1) without an overcoat layer, the front-film layers were made to face each other.) Then, the samples were left for 14 days with a load of 17 g/cm² and at a temperature of 70"C. After this leaving, the case where there was no blocking between the films was evaluated o, the case where there was slight blocking was evaluated □, and the case where there was blocking was evaluated ×.

In the actual use of the films evaluated o in bottle warmers and hot-drink vending machines, there was no blocking between the films.

The evaluation of the blocking resistance of the innercoat layer was carried out by the following method. (For the film (comparative example 1) without an innercoat layer, this evaluation was carried out on the back-film layer.) The label was heat shrunk onto a PET bottle and left for 14 days at a temperature of 70°C. After this leaving, the label was removed along the perforation, and the case where the label was removed neatly instead of with a trace of removal on the non-printed portions of the film was evaluated o, the case where a trace was left was evaluated □, and the case where there was strong blocking to the extent that the film was broken was evaluated ×. (The printed portions of the film had good blocking resistance.)

In the actual use of the films evaluated o in bottle warmers and hot-drink vending machines, there was no blocking between the films and the bottles.

### (Example 5)

The film according to example 1 of the first aspect had one surface (referred to as a back-film layer) subjected to five-color printing of a predetermined design with a gravure printer that used as a printing ink Festa 14007 (with urethane-nitrocellulose-based resin as the resin component), available from Osaka Printing Ink Manufacturing. Co., Ltd. Here such a printing design was used that provided four-piece cutting (enabled slitting in four) in the width direction of the film, and that was a discontinuous design so that the upper end portion and lower end portion of the resulting label corresponded to non-printed portions. The gap of the non-printed portion was 10 mm or smaller. Also, the design was such that the portions corresponding to the both end portions of the seal margin (6 mm wide) of a center seal were also made non-printed portions (see Fig. 2).

Subsequently, with the same printer, and by using the innercoat agent Festa Slip 14092 (in which the resin was acrylic resin, and a small amount of silicon oil, polyethylene wax, and fluorine-based wax were included), available from Osaka Printing Ink Manufacturing. Co., Ltd., an innercoat layer was provided to cover the non-printed portions except for the portion corresponding to the center seal portion of the back-film layer (the thickness of the innercoat layer being 1.0 µm thick after being dried).

Subsequently, the film was reversed in the same printer, and by using the overcoat medium Festa 14008 (in which the resin was acrylic resin, and a small amount of silicon oil, polyethylene wax, and fluorine-based wax were included), available from Osaka Printing Ink Manufacturing. Co., Ltd., an overcoat layer was provided on the entire surface of the other surface (referred to as a front-film layer) except for the portion corresponding to the center seal portion of the front-film layer (the thickness of the overcoat layer being 1.0 µm thick after being dried).

Table 2 shows this film's heat shrinkage in the lateral direction (when immersed in hot water of 90°C for 10 seconds or in boiling water for 10 seconds), tear propagation strength in the longitudinal direction, shrink stress in the lateral direction when immersed in hot water of 90°C, resilience (stiffness), and the evaluated blocking resistance of the overcoat layer.

Also, such a film was prepared separately that an overcoat layer and an innercoat layer were provided on the entire surfaces of the film. Table 2 shows the µs and µd of the overcoat layers of this film, and the µs and µd of the innercoat layers of this film.

The film of example 5 was slit into four pieces (quartering) with a slitter. Using one of the obtained films, while perforation processing of one straight line of dots was carried out (not shown), center sealing was carried out at a processing rate of 150 m/min with the innercoat layer (printed surface) facing inward. In the center sealing, center sealing equipment with a mechanism as shown in Fig. 1 was used, and as an organic solvent, a mixture solvent of 100 parts by mass of cyclohexane and 5 parts by mass of methyl ethyl ketone was used. Thus, a tubular heat-shrinkable label (original film) was prepared. The folding diameter was 108.5 mm and the seal margin was 6 mm wide.

Next, this tube was cut to a length of 80 mm to have a cylindrical heat-shrinkable label. After a PET bottle was inserted in the label, by carrying out humidity-heat treatment at 90"C for 7 seconds with the use of a shrink tunnel of a humidity-heat system (length: 5 m, vapor pressure: from 0.05 to 0.07 MPa), the label was heat-shrunk onto the PET bottle. The label was in tight contact with the bottle and pleasant-looking having no wrinkles, spots, or the like.

The evaluated blocking resistance of the innercoat layer was o. Because the tear propagation strength in the longitudinal direction of this label was modest, it was possible to remove the label manually along the perforation.

### (Comparative Example 4)

A heat-shrinkable film subjected to printing was prepared in the same manner as in example 5 except that no innercoat layer and overcoat layer were provided.

Table 2 shows the evaluated blocking resistance of the front-film layer of this film.

Next, this film was heat shrunk onto a PET bottle in the same manner as in example 2 except for the film used. The evaluated blocking resistance of the back-film layer (printed surface side) was ×.

Table 2 shows the µs and µd of the front film layers of this film before subjected to printing, and the µs and µd of the front film layers of this film before subjected to printing.

### (Example 6)

A multi-layered heat-shrinkable film with an overcoat layer and an innercoat layer provided thereon was obtained in the same manner as in example 5 except that the resin composition ratio of the intermediate layer was 65 mass % for F239, 7 mass % for Tafmer A4085, and 28 mass % for APEL 8009T.

Table 2 shows this film's heat shrinkage in the lateral direction (when immersed in hot water of 90°C for 10 seconds or in boiling water for 10 seconds), tear propagation strength in the longitudinal direction, shrink stress in the lateral direction when immersed in hot water of 90°C, resilience (stiffness), and the evaluated blocking resistance of the overcoat layer.

Next, this film was heat shrunk onto a PET bottle in the same manner as in example 2 except for the film used. The evaluated blocking resistance of the innercoat layer was o.

### (Comparative Example 5)

A multi-layered heat-shrinkable film with an overcoat layer and an innercoat layer provided thereon was obtained in the same manner as in example 5 except that the resin composition ratio of the intermediate layer was 45 mass % for F239, 5 mass % for Tafmer A4085, and 50 mass % for APEL 8009T.

Table 2 shows this film's heat shrinkage in the lateral direction (when immersed in hot water of 90°C for 10 seconds or in boiling water for 10 seconds), tear propagation strength in the longitudinal direction, shrink stress in the lateral direction when immersed in hot water of 90°C, resilience (stiffness), and the evaluated blocking resistance of the overcoat layer.

Next, this film was heat shrunk onto a PET bottle in the same manner as in example 5 except for the film used. The evaluated blocking resistance of the innercoat layer was o.

### (Comparative Example 6)

A multi-layered heat-shrinkable film with an overcoat layer and an innercoat layer provided thereon was obtained in the same manner as in example 5 except that the resin composition ratio of the intermediate layer was 90 mass % for F239 and 10 mass % for Tafmer A4085.

Table 2 shows this film's heat shrinkage in the lateral direction (when immersed in hot water of 90°C for 10 seconds or in boiling water for 10 seconds), tear propagation strength in the longitudinal direction, shrink stress in the lateral direction when immersed in hot water of 90°C, resilience (stiffness), and the evaluated blocking resistance of the front-film layer.

Next, this film was heat shrunk onto a PET bottle in the same manner as in example 5 except for the film used. The evaluated blocking resistance of the innercoat layer was o.

### (Example 7)

A multi-layered heat-shrinkable film with an overcoat layer and an innercoat layer provided thereon was obtained in the same manner as in example 5 except that the resin composition ratio of the intermediate layer was 45 mass % of F239, 5 mass % of Tafmer A4085, and 50 mass % of a comminuted product of the film obtained in comparative example 6. (The mass percentage of APEL 8009T in the intermediate film layer was approximately 12 mass %.)

Table 2 shows this film's heat shrinkage in the lateral direction (when immersed in hot water of 90°C for 10 seconds or in boiling water for 10 seconds), tear propagation strength in the longitudinal direction, shrink stress in the lateral direction when immersed in hot water of 90°C, resilience (stiffness), and the evaluated blocking resistance of the overcoat layer.

Next, this film was heat shrunk onto a PET bottle in the same manner as in example 5 except for the film used. The evaluated blocking resistance of the innercoat layer was o.

### (Comparative Example 7)

A film was intended to be produced in the same manner as in example 5 except that the resin composition ratio of the front-back film layers was 99 mass % of APEL 8009T and 1 mass % of master batch in which 10 mass % of synthetic silica was contained in Evolue SP 2320, which was base resin. However, wrinkles occurred in the winding-up step, failing to obtain a satisfactory film.

The µs and µd of the portions without wrinkles of the front-back film layers were measured, which were, on both layers, 0.75 for µs and 0.74 for µd.

**<Table 2>**

| | Ex. 5 | Ex. 6 | Ex. 7 | Com. Ex. 4 | Com. Ex. 5 | Com. Ex. 6 |
|---|---|---|---|---|---|---|
| Heat shrinkage (%): | | | | | | |
| 90°C water × 10 sec. | 58 | 58 | 58 | | 59 | 56 |
| Boiling water × 10 sec. | 66 | 66 | 66 | | 67 | 66 |
| Tear propagation strength (mN) | 642 | 558 | 696 | | 323 | 834 |
| Shrink stress (Mpa) | 6.7 | 6.7 | 6.6 | | 6.9 | 6.2 |

| Resilience (Stiffness) (mN): | | | | | | |
|---|---|---|---|---|---|---|
| Longitudinal direction | 22.2 | 23.0 | 21.7 | | 25.5 | 19.1 |
| Lateral direction | 24.3 | 25.1 | 23.8 | | 29.3 | 23.0 |

| Overcoat layer: | | | | (*1) | | |
|---|---|---|---|---|---|---|
| µs | 0.20 | | | 0.45 | | |
| µd | 0.18 | | | 0.44 | | |

| Innercoat layer: | | | | (*2) | | |
|---|---|---|---|---|---|---|
| µs | 0.20 | | | 0.45 | | |
| µd | 0.18 | | | 0.43 | | |
| Evaluated blocking resistance of the overcoat layer | ○ | ○ | ○ | × (*1) | ○ | ○ |

| | | | | | | |
|---|---|---|---|---|---|---|
| (*1): Measurement and evaluation were carried out with respect to the front-film layer. (*2): Measurement was carried out with respect to the back-film layer. | | | | | | |

As described hereinbefore, the film according to the second aspect of the present invention is light-weight, and if the film has a specific gravity of lower than 1, separation with a specific gravity separator is possible in the PET bottle recycling process. In addition, the fingerprint-attached portion is not whitened at the time of heat shrinkage. Further, while maintaining required levels of haziness (transparency), glossiness, impact resistance, shrink stress, resilience (stiffness), and the like, the film excels in heat-shrink properties (high heat-shrinkage) and perforation properties (low tear propagation strength in the longitudinal direction).

In addition, by making the linear low-density polyethylene of the front and back film layers based on metallocene catalyst so that the amount of addition of petroleum resin is significantly reduced or that petroleum resin is not added at all, it is possible to, while sufficiently preventing whitening caused by fingerprints and improving transparency, prevent blocking between labels on the mounting line where films are heat shrunk. Further, since the overcoat layer and the innercoat layer are provided, the blocking phenomenon is prevented from occurring between the films even under severe states of keeping such as keeping over a long period of time in a load state at high temperature. Since the film of the present invention is thus excellent in heat resistance, blocking resistance, and lubricity, the film can is most suitable for use in bottle warmers in supermarkets and convenience stores and in hot-drink vending machines.

### <Supplemental Remarks>

As described above, while Ziegler-Natta catalyst-based LLDPE may be used as the linear low-density polyethylene (LLDPE), metallocene catalyst-based LLDPE is preferably used.

For example, a multi-layered heat-shrinkable film was obtained in the same manner as in example 1 except that the resin composition for the front and back film layers had 68 mass % of random copolymer (APEL 8009T, available from Mitsui Chemicals, Inc.) of ethylene and cyclic olefin, 31 mass % of Ziegler-Natta catalyst-based linear low-density polyethylene (Ultzex 1520L, available from Mitsui Chemicals, Inc.) formed by polymerization with Ziegler-Natta catalyst having, as a copolymerization component, α-olefin in which the number of carbon atoms was 6, and 1 mass % of master batch with Ultzex 1520L as base resin and containing 10 mass % of synthetic silica. The haziness of this film was from 3.5 to 4.0%, and the power (heat blocking degree) required for removing the film after left for 20 hours with a load of 1.1 kg/cm² and at a temperature of 70°C was 1.3 N/cm. On the contrary, the multi-layered heat-shrinkable film according to example 1 had a haziness of from 2.5 to 2.7 %, and a heat blocking degree of 0.3 N/cm.

Thus, in terms of improving the transparency, heat resistance, and the like of the film, it is preferable to make the LLDPE used for the front and back film layers based on metallocene catalyst.

### INDUSTRIAL APPLICABILITY

As has been described hereinbefore, in the present invention, the film of the present invention is light-weight, and if the film has a specific gravity of lower than 1, separation with a specific gravity separator is possible in the PET bottle recycling process. In addition, the fingerprint-attached portion is not whitened at the time of heat shrinkage. Further, while maintaining required levels of haziness (transparency), glossiness, impact resistance, shrink stress, resilience (stiffness), and the like, the film excels in heat-shrink properties (high heat-shrinkage) and perforation properties (low tear propagation strength in the longitudinal direction).

## Claims

1. A multi-layered heat-shrinkable film composed of at least three layers comprising:
front and back film layers each composed of a resin composition comprising cyclic olefin-based resin of from 55 to 95 mass % and linear low-density polyethylene of from 45 to 5 mass %; and
an intermediate film layer composed of a resin composition comprising: a resin composition of from 95 to 55 mass % mainly composed of propylene-α-olefin random copolymer; and cyclic olefin-based resin of from 5 to 45 mass %, wherein
when immersed in hot water of 90°C for 10 seconds, the multi-layered heat shrinkable film has a heat shrinkage in a lateral direction of 50 % or higher, and has a tear propagation strength in a longitudinal direction of form 800 to 350 mN.

2. The multi-layered heat-shrinkable film according to claim 1, wherein the resin composition mainly composed of the propylene-α-olefin random copolymer comprises the propylene-α-olefin random copolymer and petroleum resin.

3. The multi-layered heat-shrinkable film according to claim 1, wherein the resin composition mainly composed of the propylene-α-olefin random copolymer comprises the propylene-α-olefin random copolymer, the petroleum resin, and low-crystalline ethylene-α-olefln copolymer and/or low-crystalline propylene-α-olefin copolymer.

4. The multi-layered heat-shrinkable film according to claim 1, wherein the linear low-density polyethylene is metallocene catalyst-based linear low-density polyethylene.

5. The multi-layered heat-shrinkable film according to claim 1, wherein wet tension of at least one surface of the film is in a range of from 38 to 48 mN/m.

6. A container comprising:
a container body; and
a label comprising a multi-layered heat-shrinkable film according to claim 1, the label being heat-shrunk onto the container body.

7. The multi-layered heat shrinkable film according to claim 1, further comprising an overcoat layer that covers the front film layer.

8. The multi-layered heat-shrinkable film according to claim 7, further comprising an innercoat layer that covers the back film layer.

9. The multi-layered heat-shrinkable film according to claim 7, wherein the linear low-density polyethylene is metallocene catalyst-based linear low-density polyethylene.

10. A container comprising:
a container body; and
a label comprising a multi-layered heat-shrinkable film according to claim 7, the label being heat-shrunk onto the container body.

## Patentansprüche

1. Mehrschichtiger Hitzeschrumpffilm, zusammengesetzt aus mindestens drei Schichten, umfassend:
Vorder- und Rückseitenfilmschichten, welche jeweils aus einer Harzzusammensetzung, umfassend 55 bis 95 Massen-% eines cyclischen Olefin-basierten Harzes und 45 bis 5 Massen-% lineares Polyethylen niedriger Dichte, zusammengesetzt sind; und
eine Zwischenfilmschicht, welche aus einer Harzzusammensetzung zusammengesetzt ist, welche umfasst: 95 bis 55 Massen-% einer Harzzusammensetzung, welche hauptsächlich aus einem statistischen Propylen-α-Olefin-Copolymer zusammengesetzt ist; und 5 bis 45 Massen-% eines cyclischen Olefin-basierten Harzes, worin
der mehrschichtige Hitzeschrumpffilm, wenn er in heißes Wasser von 90 °C für 10 Sekunden eingetaucht wird, eine Hitzeschrumpfung in einer lateralen Richtung von 50 % oder höher aufweist und eine Weiterreißfestigkeit in einer longitudinalen Richtung von 800 bis 350 mN aufweist.

2. Mehrschichtiger Hitzeschrumpffüm nach Anspruch 1, worin die Harzzusammensetzung, welche hauptsächlich aus einem statistischen Propylen-α-Olefin-Copolymer zusammengesetzt ist, das statistische Propylen-α-Olefin-Copolymer und Petroleumharz umfasst.

3. Mehrschichtiger Hitzeschrumpffilm nach Anspruch 1, worin die Harzzusammensetzung, welche hauptsächlich aus einem statistischen Propylen-α-Olefin-Copolymer zusammengesetzt ist, das statistische Propylen-α-Olefin-Copolymer, das Petroleumharz und ein niedrig kristallines Etyhlen-α-Olefin-Copolymer und/oder ein niedrig kristallines Propylen-α-Olefin-Copolymer umfasst.

4. Mehrschichtiger Hitzeschrumpffilm nach Anspruch 1, worin das lineare Polyethylen niedriger Dichte ein lineares Polyethylen niedriger Dichte auf Basis eines Metallocen-Katalysators ist.

5. Mehrschichtiger Hitzeschrumpffilm nach Anspruch 1, worin die Nassdehnung mindestens einer Oberfläche des Filmes im Bereich von 38 bis 48 mN/m liegt.

6. Behälter, umfassend:
einen Behälterkörper: und
ein Etikett, umfassend einen mehrschichtigen Hitzeschrumpffilm nach Anspruch 1, wobei das Etikett auf den Behälterkörper durch Hitze aufgeschrumpft ist.

7. Mehrschichtiger Hitzeschrumpffilm nach Anspruch 1, zusätzlich umfassend eine äußere Mantelschicht, welche die Vorderseitenfilmschicht bedeckt.

8. Mehrschichtiger Hitzeschrumpffilm nach Anspruch 7, zusätzlich umfassend eine innere Mantelschicht, welche die Rückseitenfilmschicht bedeckt.

9. Mehrschichtiger Hitzeschrumpffilm nach Anspruch 7, worin das lineare Polyethylen niedriger Dichte ein lineare Polyethylen niedriger Dichte auf Basis eines Metallocen-Katalysators ist.

10. Behälter umfassend:
einen Behälterkörper; und
ein Etikett, umfassend eine mehrschichtigen Hitzeschrumpffilm nach Anspruch 7, wobei das Etikett auf den Behälterkörper durch Hitze aufgeschrumpft ist.

## Revendications

1. Film thermorétractable multicouche composé d'au moins trois couches comprenant:
des couches de film avant et arrière, chacune étant composée d'une composition de résine comprenant 55 à 95 % en masse d'une résine à base d'oléfine cyclique et 45 à 5 % en masse d'un polyéthylène linéaire à basse densité ; et
une couche de film intermédiaire composée d'une composition de résine comprenant : 95 à 55 % en masse d'un composition de résine principalement composée d'un copolymère statistique de propylène-a-oléfine ; et 5 à 45 % en masse d'une résine à base d'oléfine cyclique, dans lequel
le film thermorétractable multicouche, lorsqu'il est immergé dans de l'eau chaude de 90 °C pendant 10 secondes, il présente un thormorétrécissement en une direction latérale égal ou supérieur à 50 % et a une résistance à la propagation de la déchirure en une direction longitudinale de 800 à 350 mN.

2. Film thermorétractable multicouche selon la revendication 1, dans lequel la composition de résine principalement composée d'un copolymère statistique de propylène-α-oléfine comprend le copolymère statistique de propylène-α-oléfine et une résine de pétrole.

3. Film thermorétractable multicouche selon la revendication 1, dans lequel la composition de résine principalement composée d'un copolymère statistique de propylène-α-oléfine comprend le copolymère statistique de propylène-α-oléfine, la résine de pétrole et un copolymère d'ethylène-α-oléfine à faible cristallinité et/ou un copolymère de propylène-α-oléfine à faible cristallinité.

4. Film thermorétractable multicouche selon la revendication 1, dans lequel le polyéthylène linéaire à basse densité est un polyéthylène linéaire à basse densité à base d'un catalyseur de métallocène,

5. Film thermorétractable multicouche selon la revendication 1, dans lequel la tension à l'état mouillé d'au moins une surface est dans la gamme de 38 à 48 mN/m.

6. Récipient comprenant :
un corps du récipient ; et
une étiquette comprenant un film thermorétractable multicouche selon la revendication 1, l'étiquette étant thermorétrécie sur le corps du récipient.

7. Film thermorétractable multicouche selon la revendication 1, comprenant en outre une couche de revêtement extérieure, qui revêt la couche de film avant.

8. Film thermorétractable multicouche selon la revendication 7, comprenant en outre une couche de revêtement intérieure, qui revêt la couche de film arrière.

9. Film thermorétractabie multicouche selon la revendication 7, dans lequel le polyéthylène linéaire à basse densité est un polyéthylène linéaire à basse densité à base d'un catalyseur de métallocène.

10. Récipient comprenant :
un corps du récipient ; et
une étiquette comprenant le film thermorétractable multicouche selon la revendication 7, l'étiquette étant thermorétrécie sur le corps du récipient.
